# EUROPEAN PATENT SPECIFICATION

(11) **EP 1 401 665 B1**
(45) Date of publication and mention of the grant of the patent: **26.04.2006**
(21) Application number: 02738434.6
(22) Date of filing: 17.06.2002
(51) Int. Cl.: B60B 27/00, F16C 35/067, F16C 33/58

(54) **MOUNTING OF THE BEARING UNIT FOR A WHEEL HUB IN A SUSPENSION SYSTEM OF A MOTOR VEHICLE**
VERFAHREN ZUR BEFESTIGUNG EINER LAGERUNG EINER RADNABE IN EINER KRAFTFAHRZEUGAUFHÄNGUNG
MONTAGE D'UN PALIER DE MOYEU DE ROUE SUR UNE SUSPENSION DE VEHICULE A MOTEUR

(30) Priority: 22.06.2001 IT TO20010604
(43) Date of publication of application: 31.03.2004
(73) Proprietor: Sistemi Sospensioni S.p.A., 20011 Corbetta MI (IT)
(72) Inventor: BARBIERO, Davide, I-10024 Moncalieri, Torino (IT); CLEMENTE, Michele, I-10060 Airasca, Torino (IT); MONTAGNANA, Gianni, I-10135 Torino (IT)
(74) Representative: Rondano, Davide
(86) International application number: PCT/IB2002/002249
(87) International publication number: WO 2003/000508

(56) References cited:
- EP-A- 0 854 303
- US-A- 6 135 641
- US-B1- 6 227 624

## Description

The present invention relates to the mounting of a motor-vehicle wheel-hub bearing.

Known examples of the mounting of a motor-vehicle wheel-hub bearing are shown in Figures 2, 3 and 4 of the appended drawings. With reference to these drawings, a bearing, generally indicated 1, comprises a radially inner ring 2 and a radially outer ring 3 which have two races for respective sets of balls 4. The inner ring 2 is mounted on a hub 5 provided with a flange 6, to which a disc of the brake 7 (shown in Figures 3 and 4) and a wheel 20 of the motor-vehicle (shown partially in Figure 4) are connected rigidly in known manner.

The outer ring 3, which has an outer cylindrical surface 8, is force-fitted with radial interference in a cylindrical seat 9 provided in a suspension strut 10. The ring is locked axially, in one direction, by abutment against a shoulder 11 formed in the strut 10 and, in the other direction, by a mechanical retaining system.

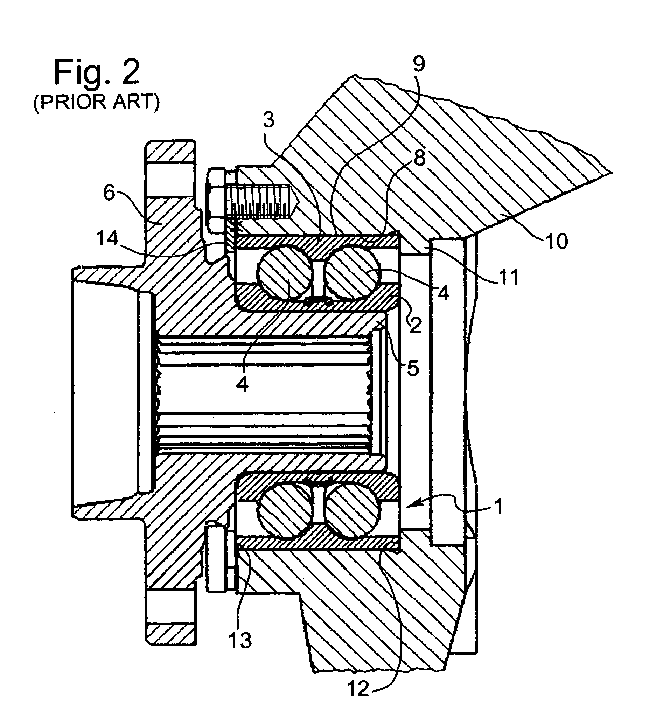

In the embodiment of Figure 2, the bearing 1 is inserted in the cylindrical seat 9 from the outside (that is, from the side of the strut facing towards the wheel) until an axially inner lateral surface 12 of the outer ring 3 is brought into abutment against the shoulder 11. The ring 3 is locked axially in the opposite direction (that is, towards the outside), in this case, by the abutment of an axially outer lateral surface 13 thereof against a cover 14 screwed to the strut 10.

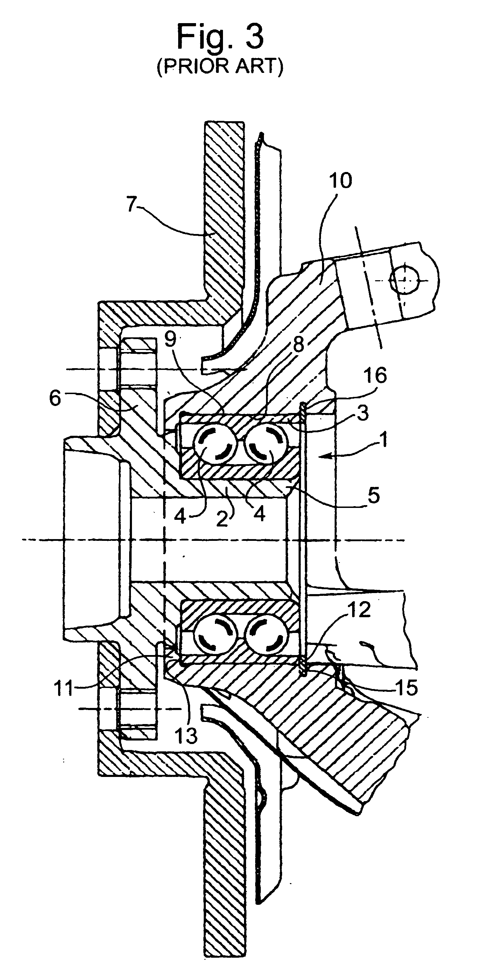

In the mounting of Figure 3, on the other hand, the bearing 1 is inserted in the cylindrical seat 9 from the inside (that is, from the side of the strut facing the chassis of the vehicle) until the axially outer lateral surface 13 of the outer ring 3 is brought into abutment against the shoulder 11 which, in this case, is formed at the level of the outer surface of the strut 10. The ring 3 is locked axially in the opposite direction (that is, towards the inside) in this case by the abutment of its axially inner lateral surface 12 against a snap ring 15 inserted into a groove 16 formed in the cylindrical seat 9 of the strut 10.

These conventional solutions have a series of disadvantages such as:
- large axial size which leads to an excessive offset both of the brake disc and of the wheel, thus penalizing their operation,
- a high mounting cost due both to a larger amount of material of the strut as well as the presence of the above-mentioned mechanical retaining systems (the snap ring and its seat in one case, and the cover and its fixing members in the other case), and to the greater cost of performing the mounting operation,
- the impossibility to control the axial preloading of the bearing and hence to optimize its fatigue life since, for reasons of mounting tolerance, the outer ring 3 is necessarily inserted between the two axial abutment surfaces (the shoulder 11 on one side, and the cover 14 or the snap ring 15 on the other) with play, and
- the possibility of axial movements of the bearing, precisely because of the mounting with axial play, which movements produce an annoying noise (a so-called clicking noise) .

A method of mounting a motor-vehicle wheel-hub bearing according to the preamble of Claim 1, as well as a bearing unit for a motor-vehicle wheel according to the preamble of Claim 3, are known from European Patent Application EP 0 854 303, which is considered to form the most relevant state of the art. This prior art document, in fact, shows which a bearing unit for a motor-vehicle wheel with a radially outer ring having first and second lateral surfaces axially remote from each other, wherein the outer ring is axially locked in a seat with its first lateral surface in abutment against a shoulder and with its second lateral surface in abutment against a crimped end portion of the seat.

US 6,135,641 discloses a bearing assembly including a pair of races and a plurality of bearing elements. The bearing assembly is provided with a thermal compensation mechanism which permits movement of the races relative to the bearing elements in a direction parallel the rotational axis of the bearing as a result of the effect of temperature variations on the materials of the races and bearing elements.

Furthermore, US 6,227,624 discloses a vehicle wheel hub and bearing retention system including a wheel hub, a bearing unit and a bearing retention and preload device, wherein the material of the inboard end of the wheel hub is re-shaped against the bearing retention and preload device in order to secure the device on the wheel hub and prevent axial and radial movement of the device relative to the wheel hub.

However, these further known solutions have the disadvantage that they cannot oppose any relative movements between the outer ring of the bearing and its seat in the strut caused by the different thermal expansions of the bearing and of the seat when the strut is made of light alloy.

The object of the present invention is to provide a mounting of a motor-vehicle wheel-hub bearing which permits to overcome the above-discussed disadvantages of the prior art .

This object is achieved, according to the present invention, by a method as defined in independent Claim 1 and by a bearing unit as defined in independent Claim 3.

The characteristics and the advantages of the present invention will become clear from the following detailed description of a preferred embodiment thereof, given purely by way of non-limiting example with reference to the appended drawings, in which:

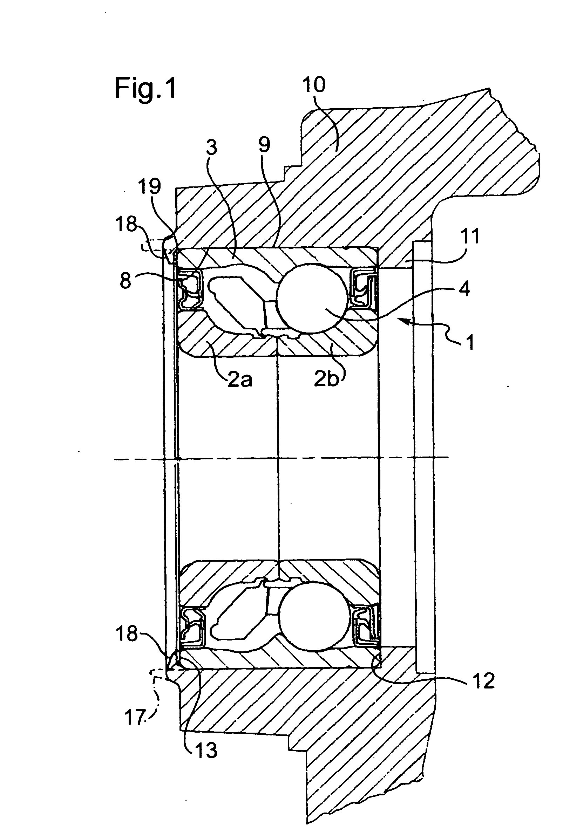

Figure 1 is a vertical, axial cross-section view of an example of the mounting of a motor-vehicle wheel-hub bearing according to the present invention, and

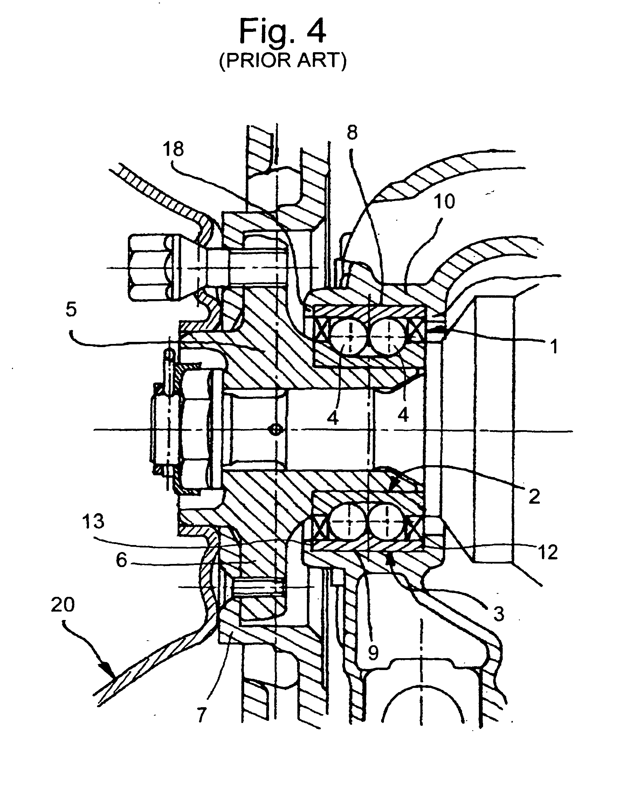

Figures 2 to 4 are vertical, axial cross-section views of respective examples of the mounting of a motor-vehicle wheel-hub bearing according to the prior art.

With reference to Figure 1, in which parts and elements identical or similar to those shown in Figures 2 to 4 (prior art) have been attributed the same reference numerals, a conventional wheel-hub bearing 1 for a motor-vehicle (not shown) comprises a radially outer ring 3 with two races for respective sets of rolling elements 4 which, in this example, are balls, and a pair of radially inner rings 2a and 2b in each of which a respective race is formed.

The outer ring 3 of the bearing has an outer cylindrical surface 8 which runs over the entire axial dimension of the ring and can be force-fitted with interference into a cylindrical seat 9 formed in a strut 10 of a suspension (of which only the end portion facing the wheel is shown).

The cylindrical seat 9 is delimited axially towards the inside by a shoulder 11 against which an axially inner lateral surface 12 of the outer ring 3 of the bearing (that is, a surface facing towards the chassis of the motor vehicle) is brought into abutment. Moreover, the seat has an axial dimension greater than that of the outer cylindrical surface 8 of the bearing 1 and has a tubular end portion 17 (shown in broken line in Figure 1) which extends axially outwards. After the force-fitting of the bearing in the seat 9, this tubular portion 17 is folded and upset radially inwards against an axially outer lateral surface 13 of the outer ring 3 by a cold plastic deformation operation, preferably by rolling. A rolled rim 18 is thus obtained, which locks the bearing axially in its seat.

In order to compensate for the relative movements between the outer ring 3 of the bearing and the cylindrical seat 9 in the strut due to the effect of different thermal expansions, for example, when the strut is made of aluminium, according to the invention a suitably shaped ring 19 of resilient material is inserted into the seat 9 so as to be compressed axially between one of the two lateral surfaces 12 or 13 of the outer ring 3 and the respective abutment surface provided by the shoulder 11 or by the rolled rim 18. In the embodiment of Figure 1, the ring 19 is inserted between the axially outer lateral surface 13 of the ring 3 of the bearing and the rolled rim 18.

The sequence of the mounting operations of the bearing 1 on the strut 10 provides, first of all, that the bearing, complete with outer ring, inner ring and rolling elements, is inserted by forcing of the outer ring 2 into the cylindrical seat 9 of the strut with predetermined radial interference until its inner lateral surface 12 is brought into abutment against the shoulder 11.

The axial dimension of the cylindrical seat 9 in the strut is predetermined in a manner such that, when the outer ring 3 of the bearing is in abutment against the shoulder 11, the end of the tubular portion 17 of the seat, in the undeformed condition prior to rolling, projects a certain distance beyond the outer lateral surface 13 of the outer ring of the bearing to permit the forming of the rolled rim 18 and hence the axial locking of the bearing in the strut.

In order to improve the locking of the bearing in the strut and, in particular, to oppose any relative movements between the outer ring 3 of the bearing and the seat 9 in the strut as a result of the different thermal expansion of the two above-mentioned elements, the ring 19 of resilient material is also inserted into the seat 9. This ring may be inserted either against the shoulder 11, before the introduction of the bearing into the seat 9, or against the outer lateral surface 13 of the outer ring 3 of the bearing, after the introduction of the bearing.

The subsequent rolling operation provides for folding and upsetting of the outer tubular portion 17 of the cylindrical seat 9 in the strut to form the rim 18 which extends radially inwards and preferably runs around the entire circumference of the seat. The rolling is advantageously performed with control of the force applied, imparting to the outer ring of the bearing an axial preloading having the desired value, which is set in a manner such as to optimize the fatigue life of the bearing.

As a result of the rolling, the ring 19 is thus compressed axially between the outer lateral surface 13 of the bearing and the rolled rim 18 or between the inner lateral surface 12 of the bearing and the shoulder 11. The play between the outer ring 3 of the bearing and the seat 9 resulting from relative thermal expansion is thus compensated for and also the control of the axial preloading of the outer ring of the bearing is further improved.

In the light of the foregoing description, it is clear that the mounting of a motor-vehicle wheel bearing according to the invention offers the advantages of:
- restricting the axial dimensions of the wheel side of the strut with consequent benefits in terms of weight and cost since it enables the offset of the brake disc and of the wheel to be reduced,
- controlling the axial preloading of the outer ring of the bearing and hence increasing the fatigue life of the bearing, and
- resisting the play resulting from relative thermal expansion between the outer ring of the bearing and its seat, when the seat is made of light alloy.

Naturally, the principle of the invention remaining the same, the forms of embodiment may be varied widely with respect to those described and illustrated purely by way of non-limiting example, without thereby departing from the scope of the invention as defined in the appended claims.

In particular, although the description and the drawings illustrate the mounting of the bearing in a seat formed in the strut, the invention is intended also to relate to the case in which the seat is formed in the wheel hub.

## Claims

1. A method of mounting a motor-vehicle wheel-hub bearing, of the type comprising the steps of:
(a) providing a bearing (1) having a radially outer ring (3) with an outer cylindrical surface (8), a first lateral surface (12), and a second lateral surface (13) at the end axially remote from the first,
(b) providing an axial cylindrical seat (9) which runs between a tubular portion (17) and a shoulder (11) and has an axial length greater than that of the outer cylindrical surface (8) of the ring (3) of the bearing (1) ,
(c) force-fitting the outer cylindrical surface (8) of the bearing (1) in the cylindrical seat (9) with radial interference until the first lateral surface (12) of the outer ring (3) is brought into axial abutment against the shoulder (11) so as to leave the tubular portion (17) of the seat (9) projecting beyond the second lateral surface (13) of the ring (3) , and
(d) cold-deforming the tubular portion (17) of the cylindrical seat (9) radially inwardly towards the second lateral surface (13) of the outer ring (3) of the bearing (1) so as to form a deformed rim (18) for locking the bearing (1) axially in the seat (9),
**characterized in that** the cold-deformation step (d) is preceded by the step of:
(c') inserting, into the cylindrical seat (9), in a position axially adjacent the outer ring (3) of the bearing (1) , a ring (19) which can be compressed resiliently in an axial direction, so that, after step (d), the ring (19) is compressed axially between one of the two lateral surfaces (12, 13) of the outer ring (3) of the bearing (1) and the shoulder (11) or the deformed rim (18) of the seat (9), respectively, in order to compensate for any relative thermal expansion between the bearing and the seat.

2. A method according to Claim 1, **characterized in that** the cold-deformation step (d) is performed with control of the deformation force so as to apply an axial preloading of predetermined value to the outer ring (3) of the bearing (1) .

3. A bearing unit for a motor-vehicle wheel, of the type in which a bearing (1) with a radially outer ring (3) having a first lateral surface (12) and a second lateral surface (13) axially remote from the first is housed in a cylindrical seat (9), the outer ring (3) of the bearing (1) being locked axially in the seat (9) with the first lateral surface (12) in abutment against a shoulder (11) and with the second lateral surface (13) in abutment against a radially inner rim (18) of the seat (9) formed by cold deformation,
**characterized in that** a ring (19) which can be compressed resiliently in an axial direction is inserted into the cylindrical seat (9) so as to be compressed axially between one of the lateral surfaces (12, 13) of the outer ring (3) of the bearing (1) and the shoulder (11) or the deformed rim (18) of the seat (9) , respectively, to compensate for any relative thermal expansion between the bearing and the seat.

## Patentansprüche

1. Verfahren zur Montage eines Motorfahrzeug-Radnabenlagers, das folgende Schritte umfasst:
(a) Bereitstellung eines Lagers (1), das einen radialen Außenring (3) mit einer äußeren zylindrischen Oberfläche (8), einer ersten seitlichen Oberfläche (12) und einer zweiten seitlichen Oberfläche (13) an dem axial vom ersten entfernten Ende aufweist,
(b) Bereitstellung eines axialen zylindrischen Sitzes (9), der zwischen einem röhrenförmigen Abschnitt (17) und einer Schulter (11) verläuft und eine axiale Länge aufweist, die größer ist als jene der äußeren zylindrischen Oberfläche (8) des Rings (3) des Lagers (1) ,
(c) kraftvermitteltes Einsetzen der äußeren zylindrischen Oberfläche (8) des Lagers (1) in den zylindrischen Sitz (9) mit radialer Interferenz, bis die erste seitliche Oberfläche (12) des Außenrings (3) axial an der Schulter (11) anstößt, um den röhrenförmigen Abschnitt (17) des Sitzes (9) über die zweite seitliche Oberfläche (13) des Rings (3) hinaus ragen zu lassen, und
(d) Kaltverformen des röhrenförmigen Abschnitts (17) des zylindrischen Sitzes (9) radial einwärts gegen die zweite seitliche Oberfläche (13) des Außenrings (3) des Lagers (1) zu, um eine deformierte Fassung (18) zum Verriegeln des Lagers (1) axial im Sitz (9) zu formen,
**dadurch gekennzeichnet, dass** dem Kaltverformungsschritt (d) folgender Schritt vorausgeht:
(c') Einfügen eines Ringes (19), der elastisch in axialer Richtung komprimiert werden kann, in den zylindrischen Sitz (9) in einer axial an den Außenring (3) des Lagers (1) angrenzenden Position, so dass der Ring (19) nach dem Schritt (d) axial zwischen einer der zwei seitlichen Oberflächen (12, 13) des Außenrings (3) des Lagers (1) und der Schulter (11) bzw. der deformierten Fassung (18) des Sitzes (9) komprimiert wird, um jede relative thermische Ausdehnung zwischen dem Lager und dem Sitz auszugleichen.

2. Verfahren nach Anspruch 1, **dadurch gekennzeichnet, dass** der Kaltverformungsschritt (d) unter Kontrolle der Deformierungskraft durchgeführt wird, um eine axiale Vorspannung einer bestimmten Größe auf den Außenring (3) des Lagers (1) aufzubringen.

3. Lagereinheit für ein Motorfahrzeugrad von dem Typ, bei dem ein Lager (1) mit einem radialen Außenring (3) mit einer ersten seitlichen Oberfläche (12) und einer zweiten seitlichen Oberfläche (13) in axialer Beabstandung von der ersten in einem zylindrischen Sitz (9) untergebracht ist, wobei der Außenring (3) des Lagers (1) axial im Sitz (9) verriegelt ist und die erste seitliche Oberfläche (12) an eine Schulter (11) anstößt und wobei die zweite seitliche Oberfläche (13) an eine radial innere Fassung (18) des durch die Kaltverformung geformten Sitzes (9) anstößt,
**dadurch gekennzeichnet, dass** ein Ring (19), der elastisch in axialer Richtung komprimiert werden kann, in den zylindrischen Sitz (9) eingeführt wird, um axial zwischen einer der seitlichen Oberflächen (12, 13) des Außenrings (3) des Lagers (1) und der Schulter (11) bzw. der deformierten Fassung (18) des Sitzes (9) komprimiert zu werden, um jede relative thermische Ausdehnung zwischen dem Lager und dem Sitz auszugleichen.

## Revendications

1. Procédé de montage d'un palier de moyeu de roue d'un véhicule à moteur du type comprenant les étapes consistant à :
(a) prévoir un palier (1) ayant une bague radialement externe (3) avec une surface cylindrique externe (8), une première surface latérale (12) et une seconde surface latérale (13) au niveau de l'extrémité axialement à distance de la première,
(b) prévoir un siège cylindrique axial (9) qui effectue une course entre une partie tubulaire (17) et un épaulement (11) et a une longueur axiale supérieure à celle de la surface cylindrique externe (8) de la bague (3) du palier (1),
(c) monter en force la surface cylindrique externe (8) du palier (1) dans le siège cylindrique (9) avec l'interférence radiale jusqu'à ce que la première surface latérale (12) de la bague externe (3) est amenée en butée axiale contre l'épaulement (11) afin de sortir de la partie tubulaire (17) du siège (9) faisant saillie au-delà de la seconde surface latérale (13) de la bague (3), et
(d) déformer à froid la partie tubulaire (17) du siège cylindrique (9) radialement vers l'intérieur, vers la seconde surface latérale (13) de la bague externe (3) du palier (1) afin de former un bord (18) déformé pour bloquer le palier (1) de manière axiale dans le siège (9),
**caractérisé en ce que** l'étape (d) de déformation à froid est précédée par l'étape consistant à :
(c') insérer dans le siège cylindrique (9), dans une position axialement adjacente à la bague externe (3) du palier (1), une bague (19) qui peut être comprimée de manière élastique dans une direction axiale, de sorte qu'après l'étape (d), la bague (19) est comprimée de manière axiale entre l'une des deux surfaces latérales (12, 13) de la bague externe (3) du palier (1) et l'épaulement (11) ou le bord (18) déformé du siège (9), respectivement, afin de compenser toute dilatation thermique relative entre le palier et le siège.

2. Procédé selon la revendication 1, **caractérisé en ce que** l'étape (d) de déformation à froid est réalisée sous le contrôle de la force de déformation afin d'appliquer une précharge axiale de valeur prédéterminée sur la bague externe (3) du palier (1) .

3. Palier destiné à une roue de véhicule à moteur du type dans lequel un palier (1) avec une bague (3) radialement externe ayant une première surface latérale (12) et une seconde surface latérale (13) axialement à distance à partir de la première est logé dans un siège (9) cylindrique, la bague externe (3) du palier (1) étant bloquée axialement dans le siège (9) avec la première surface latérale (12) en butée contre un épaulement (11) et avec la seconde surface latérale (13) en butée contre un bord (18) radialement interne du siège (9) formé par déformation à froid,
**caractérisé en ce qu'**une bague (19) qui peut être comprimée de manière élastique dans une direction axiale est insérée dans le siège (9) cylindrique afin d'être comprimée axialement entre l'une des surfaces latérales (12, 13) de la bague externe (3) du palier (1) et l'épaulement (11) ou bord (18) déformé du siège (9), respectivement, pour compenser toute dilatation thermique relative entre le palier et le siège.
